# EUROPEAN PATENT SPECIFICATION

(11) **EP 2 164 225 B1**
(45) Date of publication and mention of the grant of the patent: **13.06.2018**
(21) Application number: 08105329.0
(22) Date of filing: 12.09.2008
(51) Int. Cl.: H04L 29/06, H04L 12/18, H04W 4/06

(54) **Method and system for data distribution**
Verfahren und System zur Datenverteilung
Procédé et système de distribution de données

(43) Date of publication of application: 17.03.2010
(73) Proprietor: Nokia Solutions and Networks Oy, 02610 Espoo (FI)
(72) Inventor: Fizzotti, Alessandro, 80802, München (DE)
(74) Representative: Borgström, Markus

(56) References cited:
- WO-A1-2006/072825
- US-A1- 2007 002 859
- US-A1- 2007 177 592

## Description

The invention relates to a method and to a system for data distribution. In the publication US 2007/177592 A1 (MOONEY CHRISTOPHER F [US] ET AL) 2 August 2007 (2007-08-02) a system and method are described for providing group calling in a wireless network. More specifically, in one embodiment, there is provided a method comprising receiving a request to participate in a group call from a mobile device located in a wireless service area, determining whether a threshold number of other mobile devices in the wireless service area are participating in the group call, if the threshold number of the other mobile devices are participating in the group call, designating the requesting mobile device to receive a multicast transmission of the group call, and if the threshold number of other mobile devices are not participating in the group call, designating the requesting mobile device to receive a unicast transmission of the group call.

In the publication US 2007/002859 A1 (CORSON M S [US] ET AL) 4 January 2007 (2007-01-04) group communications methods and apparatus are described. Multiple modes of group communications signaling are supported. In a first mode, copies of packets are separately transmitted to each group member in a sector or cell. In a second mode a copy of a packet is directed to multiple group members at the same time. Transitions between the two modes may be determined as a function of the cost of operating in each of the modes in terms of system cost and/or the number of group members in a cell or sector being serviced by a transmitter.

According to the publication WO 2006/072825 A1 (NORTEL NETWORKS LTD [CA]; PERIYALWAR SHALINI [CA]; GAGE BILL [CA]) 13 July 2006 (2006-07-13) content is allowed to be delivered to a mobile terminal over different types of networks in order to efficiently use network resources. Content can be delivered using a selected delivery method over a cellular network, a local wireless network, or a broadcast network.

Mobile operators have been offering 3G UMTS unicast-based Mobile TV streaming services for some years. The advent of broadcast-based (e.g., via a DVB-H standard) mobile TV enables a broadly based distribution for a limited number of channels. The convergence of both technologies allows operators to seamlessly and (to the subscriber) transparently provide both a large number of "low-traffic" channels via unicast and a limited number of "high-traffic" channels via broadcast.

At present, distribution of channels in a mobile TV system via unicast and or multicast is a matter of manual configuration as set forth by operators and/or content providers. Hence, it is decided a priori, which channels are expected to have a high number of viewers (and are thus broadcasted) and which channels are not in the focus of such high number of viewers (such channels can be unicasted). These channels are then statically configured in the platforms. Once the configuration is done and the platforms are set up, the channels are either sent via unicast or via broadcast.

Disadvantageously, such configuration is rather fixed and the viewers' behavior may change significantly, i.e. a large number of customers may want to watch a channel that has been configured to be provided via unicast only. In addition, it is also difficult to impossible to predict for the content providers which channels are to be best transported via which service. Such a fixed approach thus inefficiently utilizes the resources of the network.

The **problem** to be solved is to avoid the disadvantages stated above and in particular to allow operators or content providers to efficiently utilize the resources of the network.

This problem is solved according to the features of the independent claims. Further embodiments result from the depending claims. The embodiments and/or examples of the following description which are not covered by the appended claims are considered as not being part of the present invention. In order to overcome this problem, a method is suggested for data processing,
- wherein data are distributed via at least two transport techniques to several devices;
- wherein the transport technique is selected dependent on a number of devices requesting or using said data.

Advantageously, the approach provided allows for dynamically allocating channels to the most suitable transport technique depending at least partially or by trend on an actual number of viewers or users of data, in particular of a channel or a program. Furthermore, the number of viewers can be determined in particular for such purpose.

It is noted that said viewers or watchers of said data may also be users in general as said data may related to any kind of data that is not limited to streaming data that may be watched or listened to.

This approach may utilize different transport mediums or technologies, in particular in combination with one another. Examples for such transport mediums are: Internet, cable connection, radio interface, satellite interface, etc.

In an embodiment, said data comprises audio, video, signaling data and/or user data.

Basically, different kinds of data can be utilized and/or supplied to said several devices.

In another embodiment, said data is streamed to said several devices.

In particular audio and/or video streams can be supplied to the devices.

In a further embodiment, said transport techniques comprise at least two of the following:
- unicast;
- broadcast;
- unicast and broadcast.

In a next embodiment, said data is conveyed to the devices via channels or programs. The data may in particular be real-time data conveyed to the several devices.

It is also an embodiment that said device comprises at least one of the following devices:
- a mobile terminal;
- a computer, in particular a mobile computer;
- a personal digital assistant;
- a television device;
- a set top box;
- a video device;
- an audio device;
- a recorder, in particular a video recorder.

Pursuant to another embodiment, the number of devices requesting or using said data is determined and/or estimated based on a feedback information.

According to an embodiment, the feedback information is provided utilizing an attribute of a DVB-H/OMA-BCAST standard.

According to another embodiment, said feedback information is collected by a broadcast switch counter and provided to and/or sent to a distribution platform selecting the transport technique.

In yet another embodiment, the feedback information comprises a regional and/or geographical information.

According to a next embodiment, said feedback information is supplied via a unicast connection by devices using a unicast service.

Pursuant to yet an embodiment, the transport technique is selected by swapping transport techniques.

Hence, the transport technique selected may be a result of a swapping of transport techniques.

According to an embodiment, the transport technique is selected by swapping unicast and broadcast or vice versa. A unicast channel conveying the highest amount of traffic is swapped with a broadcast channel conveying the least amount of traffic (in particular, the channels are swapped if a broadcast amount is less than said unicast amount). This approach may be applied in an iterative way as long as broadcast channels are available.

It is to be noted that prior to such swapping, channels may be tagged as being swappable or as being fixed (and thus not available for swapping). Hence, there may be channels broadcasted and not being watched by a significant amount of subscribers; nevertheless such channels may be fixed to the broadcast technique and must not be swapped to unicast due to regulatory or other reasons. The approach described swapping channels may thus consider channels for which such swapping is admissible (i.e. that are not tagged as 'fixed').

According to a next embodiment, prior to swapping the transport technique, the at least one device detects a change of a service delivery parameter and initiates a switching to another transport bearer.

This allows a smooth change of bearer and thus a continued viewing experience without interruption to the user.

It is noted although viewing a channel or program is described herein, this concept is as well applicable to pure audio channels or programs (hence for the listening user). It is further noted that other kind of data can be provided as well, i.e. user data or program data of various kinds.

According to an embodiment, the transport technique is further selected based on at least one of the following information:
- substantially real-time viewing information;
- traffic forecasts based on historic viewing information;
- quality and bandwidth of a channel;
- static pre-provisioned schedules.

It is also an embodiment that programs or channels of said data are sorted according to a demand or according a request by the several devices and thus the most requested or demanded programs or channels are conveyed via broadcast.

This applies for the n most viewed programs with n being the number of broadcast channels to be assigned. Of course, dependent on the bandwidth utilized n itself may vary.

It is noted that an override functionality can be supplied in order to assign a channel to a broadcast (or unicast or both) technique without considering the amount of users.

It is a next embodiment that the several devices are at least partially associated with different QoS groups.

Thus, customers or subscribers can be treated differently reflecting the service they signed up for. Such approach allows an efficient implementation of, e.g., "premium" services that allow premium users to be provided with higher and/or preferred bandwidth. Advantageously, such an approach makes the business model for the operators and/or content provider more flexible.

The problem stated above is also solved by a device comprising a and/or being associated with a processor unit and/or a hard-wired circuit and/or a logic device that is arranged such that the method as described herein is executable on said processor unit.

According to an embodiment, said device is a communication device or being associated with a communication device comprising at least one of the following:
- a platform providing data via at least one transport technique;
- a network component or function arranged to count switching channel information from subscribers which utilize a broadcast service and/or a unicast service;
- a network optimizer deciding which transport technique to assign to a particular portion of data, channel or program.

The problem stated supra is further solved by a communication system comprising the device as described herein.

Embodiments of the invention are shown and illustrated in the following figures:
- Fig.1: shows a functional architecture of a system for conveying data via unicast and via broadcast services, wherein a number of customers watching a particular channel is determined, assessed and/or counted to evaluate which channels are being watched and/or requested most of all; such channels are assigned by a Network Optimizer for being conveyed via broadcast;
- Fig.2: shows a table that can be utilized for assigning channels to be conveyed to the users either via broadcast or via unicast;
- Fig.3: shows a diagram comprising two different DVB-H regions that are supplied via one DVB-H Mobile TV Platform;
- Fig.4: shows a diagram comprising two mobile cells that are supplied by a streaming platform;
- Fig.5: shows an example of a mapping table as it could be stored with a database.

The approach provided herein in particular allows monitoring a number of subscribers and/or devices currently viewing a channel. Such channel may be distributed by different transport techniques, e.g., via unicast or via broadcast. Monitoring is in particular achieved by receiving, counting and/or tracking channel switching of the subscribers.

The following information may at least partially be considered to perform a network transport traffic optimization:
- (substantially real-time) viewing information;
- traffic forecasts based on a history of viewing information;
- quality and bandwidth of a channel;
- static pre-provisioned schedules.

A ranking of channels to be processed via either transport technique (e.g., unicast and/or broadcast) can be based on said information. Hence, service delivery platforms may be triggered to convey data accordingly.

It is noted that data to be conveyed or processed may comprise any kind of data, e.g., video, audio, audio/video, user data, program data, signaling data, voice. The data may in particular be provided as streaming data.

Advantageously, the approach suggested allows said network optimization being performed on a regional and/or on a radio network cell level. Thus, it is possible to perform a revenue-based and/or traffic-based service access optimization for unicast services on the cellular level. Preferably, a cell and/or regional information may be provided with a request of the device or supplied to the network in order to allow an optimization on such cellular level.

### Architecture

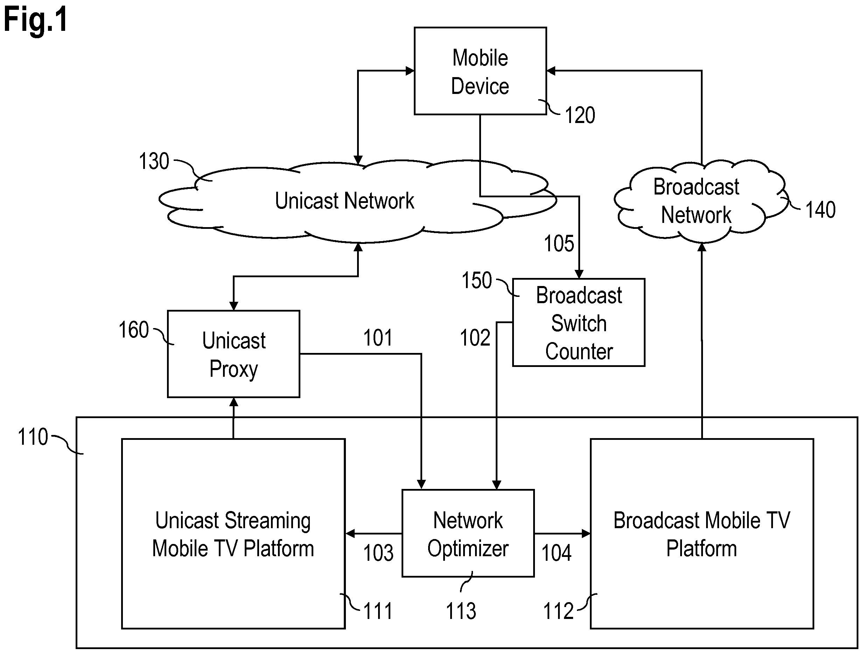

**Fig.1** shows a functional architecture of a system for conveying data via unicast and broadcast services.

A platform 110 comprises a Unicast Streaming Mobile TV Platform 111, a Broadcast Mobile TV Platform 112 and a Network Optimizer 113.

The Unicast Streaming Mobile TV Platform 111 provides data to a Unicast Proxy 160 that exchanges data with a Unicast Network 130 and conveys data to the Network Optimizer 113. The Unicast Network 130 exchanges data with a Mobile Device 120, which is in particular a converged mobile device or computer of any kind.

It is noted that the mobile device may be any client, e.g., a UMTS, 3GPP, LTE device, a personal digital assistant, a computer, a Smartphone, a set top box, any device utilized for processing and/or viewing video and/or audio data (streams), etc.

The Broadcast Mobile TV Platform 112 conveys data via a Broadcast Network 140 to the Mobile Device 120. The Mobile Device 120 conveys data via the Unicast Network 140 to a Broadcast Switch Counter 150, which further sends data to the Network Optimizer 113.

The Network Optimizer 113 within said platform 110 is connected to the Unicast Streaming Mobile TV Platform 111 and to the Broadcast Mobile TV Platform 112.

The Broadcast Switch Counter 150 is in particular used to measure a number of viewers watching a broadcast service, in particular a channel or program conveyed via the Broadcast Mobile TV Platform 112.

The Unicast Streaming Mobile TV Platform 111 determines or counts a number of clients or users utilizing the unicast service.

The Network Optimizer 113 decides which channels or programs are conveyed via which distribution technology (unicast or broadcast) and may, e.g., provide according messages to the respective platforms, i.e. to the Unicast Streaming Mobile TV Platform 111 and to the Broadcast Mobile TV Platform 112.

### The Broadcast Switch Counter 150:

A functionality of the Mobile Device 120 as a converged client may comprise transmitting an asynchronous notification 105 of channel switches for channels that are broadcasted via said Broadcast Mobile TV Platform 112.

Such notification 105 can be conveyed via the Unicast Network 130 utilizing, e.g., a HTTP-request (or any request), to the Broadcast Switch Counter 150. Said Broadcast Switch Counter 150 may be deployed or associated with the platform 110, e.g., the platform 110 or the Broadcast Switch Counter 150 could be implemented in a single device.

Regarding the large number of broadcast viewers, advantageously a scalable computing device or facility (e.g., a server farm of such Broadcast Switch Counters 150) can be deployed. Each Broadcast Switch Counter 150 may provide a consolidated or cumulated switching information comprising, e.g., a number of customers (supposedly) viewing a particular broadcast channel. Such switching information can regularly or irregularly be sent towards the Network Optimizer 113. A time period below one minute may be advantageous. As an alternative, the gathered switching information can also be offered by the Network Optimizer 113 as a service to be polled.

### The Unicast Proxy 160:

Said Unicast Proxy 160 may be implemented or deployed as a network element, in particular as a node and it may be used to proxy the real-time streaming protocol (RTSP) signaling for setting up or for tearing down unicast streaming sessions.

The streaming content may also be conveyed directly to the Mobile Device 120 without passing the Unicast Proxy 160. Preferably, the Unicast Proxy 160 may efficiently be used to handle large numbers of unicast streaming sessions. The Unicast Proxy 160 may also be deployed multiple times, with the several Unicast Proxies operating independently from each other.

The Unicast Proxy 160 may preferably count subscribers that are viewing a particular unicast channel, in particular for each channel offered via the unicast service. Advantageously, the information gathered by the at least one Unicast Proxy 160 is conveyed to and/or offered to be polled by the Network Optimizer 113 (see message 101). Transmitting information towards the Network Optimizer may preferably utilize a time period below one minute.

### The Network Optimizer 113:

The Network Optimizer 113 receives information (periodically or non-periodically) regarding the number of viewers of each unicast channel and of each broadcast channel. Hence, the Network Optimizer 113 is aware of the number of viewers currently watching a particular channel.

Based on such information, the Network Optimizer 113 may determine a (downward) sorted list (prioritized list) indicating the channels that are being watched by the most viewers. Hence, the Network Optimizer 113 is able to determine which channel should be most suitably provided via unicast and which via broadcast. In particular, the Network Optimizer 113 is able to determine whether a channel conveyed via unicast shall be swapped to be conveyed via broadcast or vice versa. The Network Optimizer 113 can send appropriated messages 103, 104 towards the Unicast Streaming Mobile TV Platform 111 and to the Broadcast Mobile TV Platform 112 thereby efficiently utilizing channel reallocation.

Basically, the Network Optimizer 113 may utilize - based on said sorted (prioritized) list - the fact that the channels or programs requested or being watched by most subscribers (which is indicated by their devices) are - in case of no further restriction - to be provided via broadcast, whereas channels or programs that are less often watched can be unicasted to the subscribers.

A threshold value for deciding which channel or program to convey via unicast and which one via broadcast may depend on several conditions, e.g., bandwidth available, number of channels or programs requested by many and/or few subscribers, channels or programs that need to be transmitted or provided in any case (via one transport technique or the other), knowledge about future data to be transmitted (e.g., world-cup final to start in 20 minutes may have to limit swapping of channels on the operator side based on a rather arbitrary zapping of the customers shortly before such mass gathering sports event), etc.

A Mobile Device 120 that is supplied with a channel which is being reallocated by said Network Optimizer 113 may automatically switch over to an alternative bearer regarding this particular channel. Both (former and alternative) bearers may be provided in a service announcement conveyed to the Mobile Device 120 prior to reallocating a channel.

### Monitoring of Unicast Usage:

Monitoring the numbers of viewers for channels transported via unicast is enabled by the Unicast Proxy 160 deployed or arranged before the Unicast Stream Mobile TV Platform 111. The Unicast Proxy 160 may advantageously be used merely for processing signaling traffic (e.g., for UMTS 3GPP based streaming an RTSP proxy could be used) for controlling the delivery of the service. Not processing the actual streaming content (traffic) by such Unicast Proxy 160 allows for a cost efficient implementation.

Every time the viewer changes a channel, the Mobile Device 120 signals (via a setup of a new streaming session or a channel switch command) such change. Such signaling can be monitored by the Unicast Proxy 160 and (e.g., periodically) forwarded or offered to the Network Optimizer 113.

Advantageously, such monitoring is compatible with existing Mobile Devices 120 and/or existing streaming solution equipment.

### Monitoring of Broadcast Usage:

Monitoring the numbers for channels transported via broadcast is enabled by notifications 105 conveyed to a receiving network element (the Broadcast Switch Counter 150). Each notification 105 may advantageously be triggered by the Mobile Device 120 channel switching from one broadcast channel to another.

In case of a DVB-H/OMA-BCAST standard based system, a destination (URL) of such notification can become part of an Electronic Service Guide (ESG) corresponding to an attribute as defined by the standard ("ServiceAccessNotificationURL"). Such attribute may be flagged mandatory and/or may become valid for all kinds of services (unicast and broadcast).

### Network Optimization Mechanism

The approach provided advantageously allows deciding which channels are to be distributed by either unicast or broadcast. To achieve this, data from users of unicast and broadcast services are collected and processed preferably together with further information to decide which channel to be conveyed via unicast and which via broadcast.

It is noted that such further information may comprise additional knowledge provided by databases or by content providers. In addition, prior knowledge can be used to make or to help making the decision. For example, in case a world cup final occurs as a live event, it can be expected from past experience, that a significant amount of viewers want to watch such final. Thus, it can be (easily) decided to transmit such event via broadcast.

The approach enables the operator or the content provider to maximize a service delivery efficiency in view of several constraints that may be of commercial, legal, technical or any other nature.

Thus, the operator needs to optimize the channel distribution thereby in particular considering at least partially the following steps:
- Determine relevant constraints to be considered;
- Determine an optimized channel order or line-up (prioritized list);
- Provisioning or re-provisioning / allocating channels accordingly.

### Constraints of commercial, legal or technical nature

To meet the objective, i.e. in order to being able to decide whether a particular channel is provided via unicast, broadcast or both, may be processed as a task meeting or trying to meet as many constraints as possible. However, the operator or content provider may set up the constraints according to his or her individual preferences.

For example, the operator may want or have to fulfill constraints that stem from different spheres: For example, free-to-air channels may have to be broadcasted all the time for legal and regulatory reasons.

Advantageously, the operator firstly determines and assesses the constraints s/he needs to meet and marks the affected channels accordingly. Such marking helps to (not) consider such channels during optimization. However, it may also be possible to provide for a manual override: For example, on Sunday, 20:00h, channel A must be broadcasted.

### Optimizing the efficiency of delivering the services

There are numerous ways to produce an efficient line-up of channels, i.e. a prioritized list of channels to be conveyed via unicast and/or via broadcast.

In order to efficiently prioritize such list of channels, various characteristics and/or parameters can be used, e.g., a total bandwidth, a last change or swap between unicast and broadcast, an expected future load for a particular channel, etc.

Such prioritization may preferably consider a present as well as a future load situation in particular for each channel. Furthermore, past experiences (histories) can be utilized to predict an efficient future line-up of channels.

It is of particular advantage to determine an efficient channel line-up over the time with the least number of "provisioning switches" (i.e. changing the transport technique between unicast and broadcast). To achieve this, a weighted average algorithm can be used utilizing in particular at least one of the following parameters:
(1) A current total bandwidth of a channel (number of subscribers X channel bit rate) (as a percentage of a current maximum):
   This parameter is useful since it provides an accurate measure of a current bandwidth usage per channel.
(2) A current total bandwidth average rate of changes within a number of last measurements (as a percentage of a current maximum):
   This parameter is a short term total bandwidth trend indicator.
(3) An adjusted expected future total channel bandwidth based on historic data (as a percentage of a current maximum):
   This parameter can be used to consider a periodic long term trend for the particular channel, e.g., football news every day at 18:00h may result in a high number of viewers for this channel).

Furthermore, this parameter can be adjusted by the deviation of the current total bandwidth measurement from the trend revealed by the history. For example, the closer an event is to its comparable historic value, the more likely the history will repeat itself.

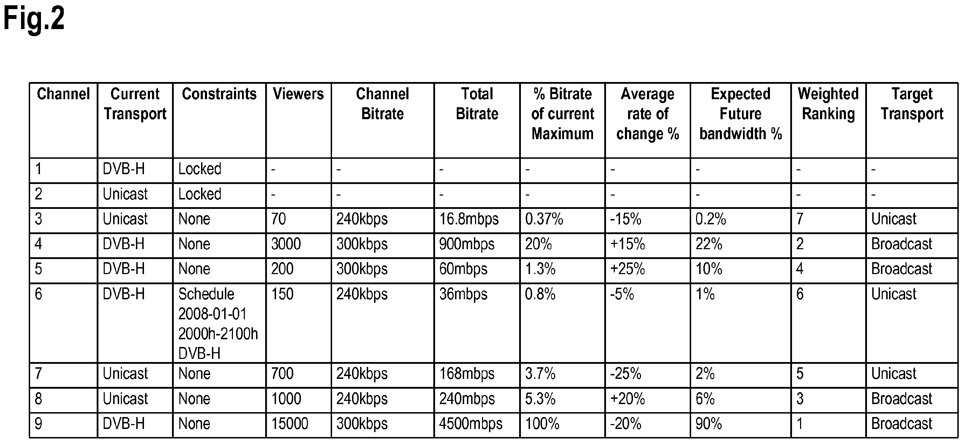

Based on a weighted average, i.e. on a selection of weights based on a fine tuning of the system, an exemplary optimized channel prioritization (line-up) can be determined according a table shown in **Fig.2****.**

Various schemes exist for determining the best coefficients for calculating a line-up of channels, i.e. a weighted ranking. Examples for such schemes are: Three variable linear regression, linear optimization, neural networks, etc.

The following approach may be utilized in order to select channels that are swapped with one another: The broadcast channels are allocated from highest to lowest rankings (i.e. regarding the total number of viewers) as long as there are broadcast channels available. According to the example shown in Fig.2, there are 4 broadcast slots. Hence, channels ranking 1 to 4 are allocated to broadcast. Channel 8 is the only channel for which the current transport technique ("Unicast") does not match its target transport technique ("Broadcast"). Starting from the lowest priority, the first broadcast channel is selected, in this example channel 6. Hence, channel 8 ("Unicast") and channel 6 ("Broadcast") are to be swapped. This selection method results in swapping unicast channels conveying the highest amount of traffic with the broadcast channels conveying the least amount of traffic.

Regarding the example shown in Fig.2, channels 3 and 7 remain unicast channels, channels 4, 5 and 9 remain broadcast channels and channel 8 is switched to broadcast, whereas channel 6 is switched to unicast.

Although channel 5 ("Broadcast") currently requires less bandwidth than channel 7 ("Unicast"), the optimization mechanism does not suggest swapping these two channels due to the historic data and due to changes regarding their bit rates, i.e. the unicast channel 7 will soon require (again) less bandwidth than the broadcast channel 5.

### Channel line-up provisioning

Once the optimized line-up has been determined, appropriate provisioning commands are sent to the respective service delivery platforms in order to shift the channel transport technology (e.g., from broadcast to unicast or vice versa), if necessary.

The format of such provisioning messages (103, 104 according to Fig.1) and the interface used may depend on an actual service delivery platforms employed.

To ensure a convenient user experience during a change of transport technology, the following steps may apply:
(1) The channel to be moved is first set up for the new transport technique. In most cases, the available broadcast bandwidth is fully utilized (i.e. there are no free slots for conveying data), thus channel moving may be initiated with moving the broadcast channel to a unicast channel. This way, the broadcast slot becomes released to be fed with data from the unicast channel.
(2) A service announcement provided by the respective platforms is updated accordingly. It is noted that the service announcement may have to be configured in such a way that the changes quickly arrive at the clients.
(3) Once the channel is available on the new transport technique and the service announcement has been changed, the channel is de-allocated from the old transport technique.
(4) Subscribers accessing the services from point (3) onwards have access to the channel via the new (changed) transport technique.

To ensure that subscribers watching a channel during swapping of the transport technique nevertheless experience seamless transition, the client application may continuously monitor the service announcement. If the client application detects a change of service delivery parameters, it initiates switching to another transport bearer. As the client application (or the player running at the client device) may buffer, e.g., 3s to 5s of content, it is possible to switch between bearers without the viewer experiencing any interruption of the program.

### Regional Optimization

Broadcast networks can implement or provide a regional (geographical) concept with the content for each region being transmitted independently.

Extensions to the channel notification mechanisms for both unicast and broadcast allows the network optimization mechanism to consider regional viewing differences such as topology or geographic location of both cellular network and broadcast networks.
(a) Unicast extensions for regional optimization:
   The mobile device is aware of its currently active Cell ID to which it is connected. This information can be used by applications for providing location dependent services (e.g., Google Maps). A media player application on the mobile device may send the Cell ID as a part of the streaming session setup information (e.g., as an RTSP header parameter or as a part of a RTSP URI).
(b) Broadcast extensions for regional optimization:
   On the broadcast side, no actual functional changes may become necessary. For example, the previously mentioned channel switch notification mechanism used to transmit the channel IDs of the target channel can be re-used for regional optimization purposes.

Advantageously, the service IDs of the channels are configured such that they are different for each region. Thus, the channel switch notification automatically identifies in which region the subscriber is currently located.

Regional optimization can be considered as a special case of the more general network optimization. The network optimizer being aware of topology information mapping UMTS cell IDs to DVB-H regions may for one region perform the same kind of optimization as is provided for the whole network.

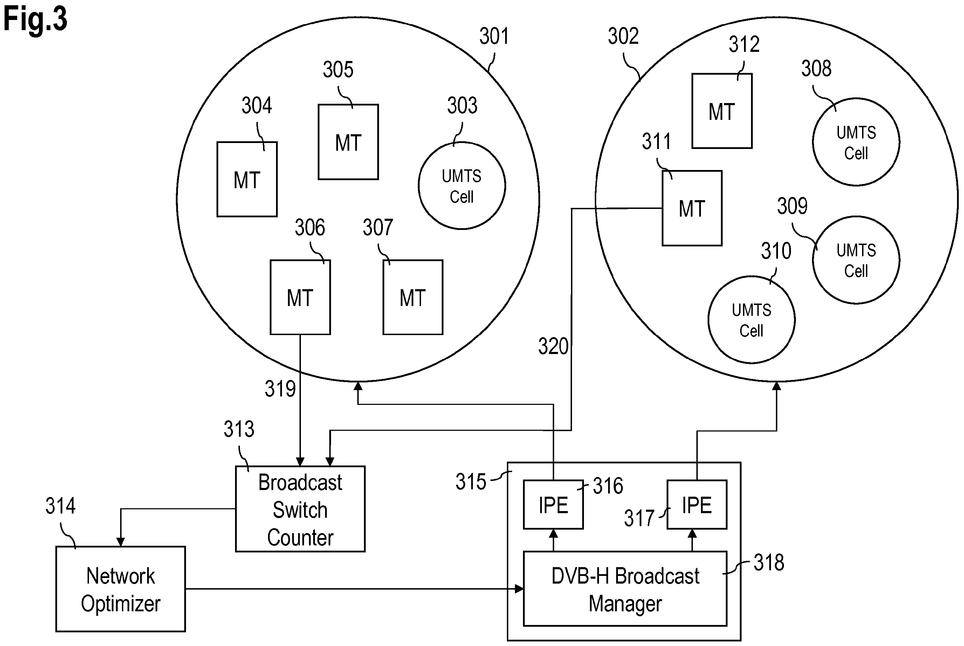

**Fig.3** shows a diagram comprising two different DVB-H regions that are supplied via one DVB-H Mobile TV Platform.

A DVB-H Region 301 comprises an UMTS Cell 303 and four mobile terminals MT 304 to 307. A DVB-H Region 302 comprises three UMTS Cells 308 to 310 and two mobile terminals MT 311 and 312.

A DVB-H Mobile TV Platform 315 comprises a DVB-H Broadcast Manager 318, which is connected to two IP Encapsulators IPE 316 and 317, wherein the IPE 316 is connected to the DVB-H Region 301 and the IPE 317 is connected to the DVB-H Region 302.

Each of the mobile terminals MT 306 and 311 conveys data to a Broadcast Switch Counter 313, which further transmits data to a Network Optimizer 314. The Network Optimizer 314 is connected to the DVB-H Broadcast Manager 318.

In particular regarding the Broadcast Switch Counter 313 and the Network Optimizer 314, reference is made to Fig.1 above in view of components 150 and 113.

The Network Optimizer 314 provides in particular the following functionalities:
- The mobile terminal MT 306 and/or the mobile terminal MT 311 each sends a switch notification 319, 320 to the Broadcast Switch Counter 313. Each such notification 310, 320 comprises a "Region Identifier" in particular associated with the notification URI. This can be achieved, e.g., as a OMA B CAST Service Guide is broadcasted by the IPE separately to each region and hence such notification URI can be different for each region.
- The Network Optimizer 314 is aware of which UMTS cell IDs are contained deployed within which DVB-H region, i.e. that UMTS Cell 303 is associated with DVB-H Region 301 and that UMTS Cells 308 to 310 are associated with DVB-H Region 302.

### Cell congestion based unicast service prioritization

Based on the previously mentioned extension to the mobile terminal, in particular one of its applications, e.g., a unicast media application player, a service access revenue maximization and/or a quality-of-service (QoS) control on a cell level for any data service, in particular for streaming services, may be provided.

A UMTS 3G cell supports only a limited number of data connections at required bitrates for audio/video (A/V) streaming. Requests for additional bandwidth would degrade the available bandwidth and thus would deteriorate the A/V experience for everyone else. In a worst case scenario, one fulfilled request for additional bandwidth could render the service useless for all subscribers currently watching an A/V channel.

The approach provided allows to re-use the cell ID information transmitted (as part of the RTSP setup information and afterwards as RTSP options in case of cell handovers) thereby enabling a cheap and efficient implementation of QoS control on the streaming platform.

Service requests directed to cells that are deemed to be congested are rejected by the streaming platform even before they actually may generate a significant amount of traffic. In addition, a request for a new streaming connection may be rejected based on business or profile reasons. For example, an existing connection from a basic user may even be terminated in order to clear bandwidth for a connection requested by or to be provided to a premium user.

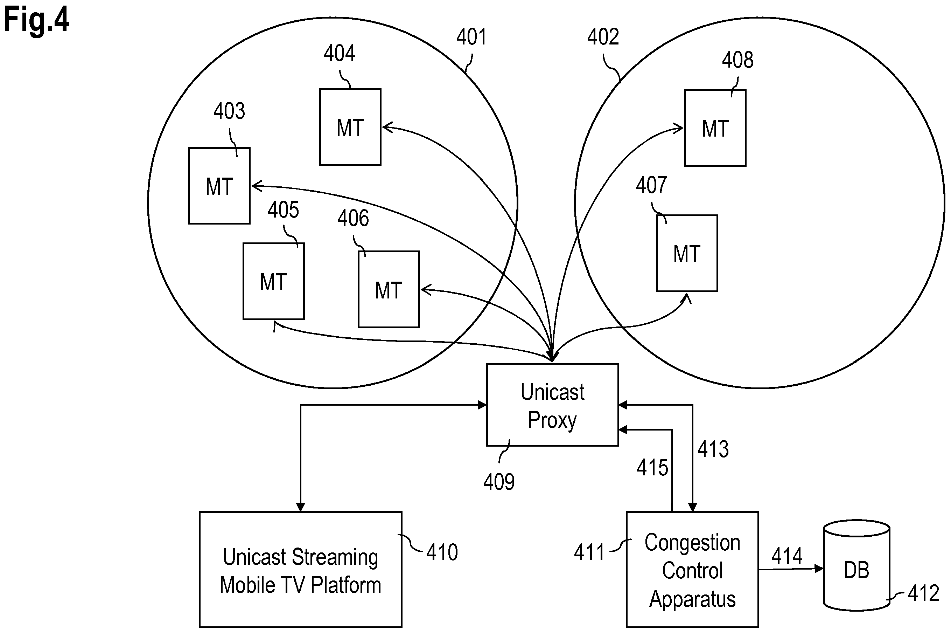

**Fig.4** shows a diagram comprising two mobile cells that are supplied by a streaming platform. Fig.4 depicts a cell 401 with a GID1 and a cell 402 with a GID2. The cell 401 comprises four mobile terminals MT 403 to 406 and the cell 402 comprises two mobile terminals MT 407 and 408. All mobile terminals MT 403 to 408 are connected to a Unicast Proxy 409. The Unicast Proxy 409 is connected to a Unicast Streaming Mobile TV Platform 401 and to a Congestion Control Apparatus 411, which is arranged to access a database DB 412.

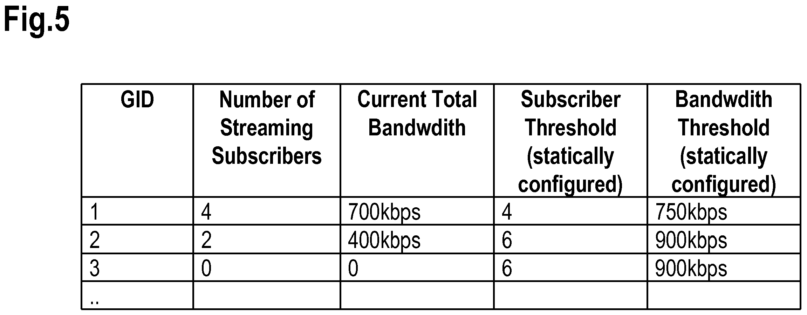

Hereinafter, a sequence of steps are described to clarify based on Fig.4 as how cell-level congestion control for streaming services can be supported and/or implemented:
(1) Mobile devices MT 403 to 406 from the cell 401 with cell-ID GID1 trigger RTSP requests for streaming services. The RTSP requests are directed to Unicast Streaming Mobile TV Platform 410.
(2) The mobile devices MT 403 to 406 include the cell-ID as a parameter in the RTSP SETUP request (either as GET/POST parameter or as part of the RTSP request header).
(3) The Unicast Proxy 409 extracts the cell-ID information from the request before forwarding the request to the Unicast Streaming Mobile TV Platform 410. An information 413 is sent to the Congestion Control Apparatus 411 comprising the requested bandwidth if available.
(4) The Congestion Control Apparatus 411 keeps track of which streaming sessions have been started in which cells by providing respective entries to the database DB 412 (see message flow 414). **Fig.5** shows an example of a mapping table as it could be stored with the database DB 412.
(5) The Congestion Control Apparatus 411 can then decide whether to allow the requested session or not. For making such decision, two different strategies, a "Non-discriminatory strategy" or a "Business value strategy" may apply:
(6) Non-discriminatory strategy:
   This type of strategy only counts each subscriber and
   assumes that all subscribers are peers. The decision can be made based on either the number of subscribers that are already active in the cell or it can be made based on the total amount of requested streaming bandwidth by the subscribers in the cell - if such information is available or has been made available. For each cell-ID, a different threshold (regarding the number of allowable active subscribers or the total amount of streaming bandwidth) may apply or could be set up. Once such threshold is reached, the Congestion Control Apparatus 411 denies any further use of the service.
(7) Business value strategy:
   This type of strategy considers a business value assigned by the operator to each subscriber. For example, a "premium subscriber" can be treated differently compared to a "normal subscriber". If this premium subscriber requests streaming bandwidth, the Congestion Control Apparatus 411 may instruct the Unicast Proxy 409 to disconnect (see message flow 415 in Fig.4) at least one normal subscriber (if available). The bandwidth released can be used for the premium subscriber in order to meet his or her request.
(8) Once a subscriber's streaming session is over, the Unicast Proxy 409 sends another message (as depicted by message flow 413 in Fig.4) to the Congestion Control Apparatus 411 informing it that the subscriber does not provide any streaming service anymore. Thus, the Congestion Control Apparatus 411 updates the database DB 412 accordingly.

### Support for other transport bearer technologies

The approach described is independent from any transport technology. Hence, other unicast and/or broadcast bearer technologies may be supported, e.g., WLAN, MBMS, etc.

Preferably, devices or clients provide their position or information regarding their position to a device that is enabled to at least partially control the unicast platform and the broadcast platform, in order to define which data or service or which kind of traffic is conveyed via unicast, which one is conveyed via broadcast and which one is conveyed via both. Such device is arranged in a way to determine or assess an efficient ranking or line-up or prioritization of channels (or traffic portions to be provided to the clients).

In particular, the approach also suggests as how an advantageous network selection can be achieved in particular in the context of a 3GPP-compliant unicast multi-media delivery and/or in the context of an OMA BCAST based broadcast delivery.

The approach and/or device suggested can be combined with an MBMS network and with devices supporting OMA B CAST ESG (electronic service guide) as means for performing service announcement. In particular, an efficient selection between all three networks in parallel can be provided by the approach described herein.

### Further Advantages

One benefit of this approach is enabling the operators to maximize an efficiency using their deployed platforms with regard to radio access and to core networks. In addition to allowing optimized and efficient dimensioning of a unicast streaming platform, the approach also enables to reduce A/V traffic in the core network and to be provided via the radio access networks. Thus, more bandwidth is available for other services thereby allowing the operators to generate additional revenue.

The solution provided regarding cell congestion based unicast service prioritization furthermore allows the operator providing a finer grade of control for the subscribers' QoS. Thus, premium subscribers can be given a better service than normal subscribers thereby supporting the operator's customer segmentation efforts.

### List of Abbreviations:

- 3GPP: 3rd Generation Partnership Project
- A/V: Audio/Video
- BCAST: Mobile Broadcast Services Enabler Suite
- DB: Database
- DSL: Digital Subscriber Line
- DVB: Digital Video Broadcasting
- DVB-H: DVB for handheld devices
- ESG: Electronic Service Guide
- LAN: Local Area Network
- LTE: Long Term Evolution
- MBMS: Multimedia Broadcast Multicast Service
- OMA: Open Mobile Alliance
- PDA: Personal Digital Assistant
- QoS: Quality of Service
- RTSP: Real-Time Streaming Protocol
- STB: Set Top Box
- TV: Television
- UMTS: Universal Mobile Telecommunications System
- URI: Uniform Resource Identifier
- URL: Uniform Resource Locator
- WLAN: Wireless LAN

## Claims

1. A method for data distribution,
- wherein data are distributed by a distribution platform (110) via at least two transport techniques to several devices (120, 304, 305, 306, 307, 311, 312),
wherein said transport techniques comprise unicast and broadcast,
**characterized in that**
- the transport technique is selected by the distribution platform (110) dependent on a number of devices requesting or using said data and based on traffic forecasts based on history viewing information, wherein the number of the devices requesting or using said data is estimated based on a feedback information, wherein devices supplied by broadcast data provide channel switching information (105, 319, 320) as the feedback information,
- said feedback information provided by said devices supplied by said broadcast data is collected by a broadcast switch counter (150, 313) and provided to and/or sent to the distribution platform (110) selecting the transport technique,
- a network optimizer (113, 314) comprised by the distribution platform (110) decides, which transport technique to assign to a particular channel.

2. The method according to claim 1, wherein said data comprises audio, video, signaling data and/or user data.

3. The method according to any of the preceding claims, wherein said data is streamed to said several devices.

4. The method according to any of the preceding claims, wherein said transport techniques comprise at least two of the following:
- unicast;
- broadcast;
- unicast and broadcast.

5. The method according to any of the preceding claims, wherein said data is conveyed to the devices via channels.

6. The method according to any of the preceding claims, wherein said device is comprises at least one of the following device:
- a mobile terminal;
- a computer, in particular a mobile computer;
- a personal digital assistant;
- a television device;
- a set top box;
- a video device;
- an audio device;
- a recorder, in particular a video recorder.

7. The method according to any of the preceding claims, wherein the number of devices requesting or using said data is determined based on the feedback information.

8. The method according to any of the preceding claims, wherein the feedback information is provided utilizing an attribute of a DVB-H/OMA-BCAST standard.

9. The method according to any of the preceding claims, wherein the feedback information comprises a regional and/or geographical information.

10. The method according to any of the preceding claims, wherein said feedback information is supplied via a unicast connection by devices using a unicast service.

11. The method according to any of the preceding claims, wherein the transport technique is selected by swapping transport techniques.

12. The method according to claim 11, wherein the transport technique is selected by swapping unicast and broadcast or vice versa.

13. The method according to claim 12, wherein a unicast channel conveying the highest amount of traffic is swapped with a broadcast channel conveying the least amount of traffic.

14. The method according to any of the claims 11 to 13, wherein prior to swapping the transport technique, the at least one device detects a change of a service delivery parameter and initiates a switching to another transport bearer.

15. The method according to any of the preceding claims, wherein the transport technique is further selected based on at least one of the following information:
- substantially real-time viewing information;
- quality and bandwidth of a channel;
- static pre-provisioned schedules.

16. The method according to any of the preceding claims, wherein programs or channels of said data are sorted according to a demand or according to the request by the several devices and thus the most requested or demanded programs or channels are conveyed via broadcast unless further restrictions.

17. The method according to any of the preceding claims, wherein the several devices are at least partially associated with different QoS groups.

18. A system for data distribution comprising a distribution platform (110) adapted for distributing data via at least two transport techniques to several devices (120, 304, 305, 306, 307, 311, 312), wherein said transport techniques comprise unicast and broadcast, **characterized in that**
- the distribution platform (110) is further adapted for selecting the transport technique dependent on a number of devices requesting or using said data and based on traffic forecasts based on history viewing information, wherein the number of the devices requesting or using said data is estimated based on a feedback information, wherein devices supplied by broadcast data provide channel switching information (105, 319, 320) as the feedback information,
- the system further comprises a broadcast switch counter (150, 313) adapted for collecting and providing and/or sending said feedback information provided by said devices supplied by said broadcast data to the distribution platform (110) selecting the transport technique,
- the distribution platform (110) comprises a network optimizer (113, 314) adapted to decide, which transport technique to assign to a particular channel.

19. The system according to claim 18, wherein said system is a communication system comprising:
- a function arranged to count switching channel information from subscribers which utilize a broadcast service and/or a unicast service.

## Patentansprüche

1. Verfahren zur Datenverteilung, wobei
- Daten durch eine Verteilplattform (110) über mindestens zwei Transporttechniken an einige Einrichtungen (120, 304, 305, 306, 307, 311, 312) verteilt werden und
die Transporttechniken Unicast und Broadcast umfassen, **dadurch gekennzeichnet, dass**
- die Transporttechnik durch die Verteilplattform (110) abhängig von einer Anzahl von Einrichtungen, die die Daten anfragen oder verwenden, und auf der Grundlage von Verkehrsvorhersagen auf der Grundlage von Einschaltverlaufsinformationen ausgewählt wird, wobei die Anzahl der Einrichtungen, die die Daten anfragen oder verwenden, auf der Grundlage von Rückmeldungsinformationen geschätzt wird, wobei Einrichtungen, die durch Broadcast-Daten versorgt werden, Kanalumschaltinformationen (105, 319, 320) als die Rückmeldungsinformationen bereitstellen,
- die Rückmeldungsinformationen, die durch die Einrichtungen, die durch die Broadcast-Daten versorgt werden, von einem Broadcast-Umschaltzähler (150, 313) gesammelt werden und für die Verteilplattform (110), die die Transporttechnik auswählt, bereitgestellt und/oder an sie gesendet werden, und
- ein Netzoptimierer (113, 314), den die Verteilplattform (110) umfasst, entscheidet, welche Transporttechnik einem bestimmten Kanal zugewiesen werden soll.

2. Verfahren nach Anspruch 1, wobei die Daten Audio-, Video-, Signalisierungs- und/oder Anwenderdaten umfassen.

3. Verfahren nach einem der vorhergehenden Ansprüche, wobei die Daten an die einigen Einrichtungen gestreamt werden.

4. Verfahren nach einem der vorhergehenden Ansprüche, wobei die Transporttechniken mindestens zwei der Folgenden umfassen:
- Unicast;
- Broadcast; und
- Unicast und Broadcast.

5. Verfahren nach einem der vorhergehenden Ansprüche, wobei die Daten den Einrichtungen über Kanäle übermittelt werden.

6. Verfahren nach einem der vorhergehenden Ansprüche, wobei die Einrichtung mindestens eine der folgenden Einrichtungen umfasst:
- ein mobiles Endgerät;
- einen Computer, insbesondere einen mobilen Computer;
- einen persönlichen digitalen Assistenten;
- eine Fernseheinrichtung;
- eine Set-Top-Box;
- eine Videoeinrichtung;
- eine Audioeinrichtung; und
- eine Aufnahmeeinrichtung, insbesondere einen Videorekorder.

7. Verfahren nach einem der vorhergehenden Ansprüche, wobei die Anzahl der Einrichtungen, die die Daten anfragen oder verwenden, auf der Grundlage der Rückmeldungsinformationen bestimmt wird.

8. Verfahren nach einem der vorhergehenden Ansprüche, wobei die Rückmeldungsinformationen unter Verwendung eines Merkmals einer DVB-H/OMA-BCAST-Norm bereitgestellt werden.

9. Verfahren nach einem der vorhergehenden Ansprüche, wobei die Rückmeldungsinformationen regionale und/oder geographische Informationen umfassen.

10. Verfahren nach einem der vorhergehenden Ansprüche, wobei die Rückmeldungsinformationen von Einrichtungen unter Verwendung eines Unicast-Dienstes über eine Unicast-Verbindung geliefert werden.

11. Verfahren nach einem der vorhergehenden Ansprüche, wobei die Transporttechnik durch Tauschen von Transporttechniken ausgewählt wird.

12. Verfahren nach Anspruch 11, wobei die Transporttechnik durch Tauschen von Unicast mit Broadcast oder umgekehrt ausgewählt wird.

13. Verfahren nach Anspruch 12, wobei ein Unicast-Kanal, der die höchste Verkehrsmenge übermittelt, mit einem Broadcast-Kanal, der die geringste Verkehrsmenge übermittelt, getauscht wird.

14. Verfahren nach einem der Ansprüche 11 bis 13, wobei die mindestens eine Einrichtung vor dem Tauschen der Transporttechnik eine Änderung eines Dienstauslieferungsparameters detektiert und ein Umschalten auf einen weiteren Transportträger initiiert.

15. Verfahren nach einem der vorhergehenden Ansprüche, wobei die Transporttechnik ferner auf der Grundlage mindestens eines der folgenden Informationselemente ausgewählt wird:
- im Wesentlichen Echtzeitanzeigeinformationen;
- Qualität und Bandbreite eines Kanals; und
- statische, vorab bereitgestellte Pläne.

16. Verfahren nach einem der vorhergehenden Ansprüche, wobei Programme oder Kanäle der Daten gemäß einer Anforderung oder gemäß der Anfrage durch die einigen Einrichtungen sortiert werden und somit die am meisten angefragten oder angeforderten Programme oder Kanäle mittels Broadcast übermittelt werden, sofern nicht weitere Beschränkungen vorliegen.

17. Verfahren nach einem der vorhergehenden Ansprüche, wobei die einigen Einrichtungen mindestens teilweise verschiedenen QoS-Gruppen zugeordnet sind.

18. System zur Datenverteilung, das eine Verteilplattform (110) umfasst, die zum Verteilen von Daten über mindestens zwei Transporttechniken an einige Einrichtungen (120, 304, 305, 306, 307, 311, 312) ausgelegt ist, wobei die Transporttechniken Unicast und Broadcast umfassen,
**dadurch gekennzeichnet, dass**
- die Verteilplattform (110) ferner ausgelegt ist, die Transporttechnik abhängig von einer Anzahl von Einrichtungen, die die Daten anfragen oder verwenden, und auf der Grundlage von Verkehrsvorhersagen auf der Grundlage von Einschaltverlaufsinformationen auszuwählen, wobei die Anzahl der Einrichtungen, die die Daten anfragen oder verwenden, auf der Grundlage von Rückmeldungsinformationen geschätzt wird, wobei Einrichtungen, die durch Broadcast-Daten versorgt werden, Kanalumschaltinformationen (105, 319, 320) als die Rückmeldungsinformationen bereitstellen,
- das System ferner einen Broadcast-Umschaltzähler (150, 313) umfasst, der ausgelegt ist zum Sammeln und Bereitstellen und/oder Senden der Rückmeldungsinformationen, die durch die Einrichtungen, die durch die Broadcast-Daten versorgt werden, bereitgestellt werden, an die Verteilplattform (110), die die Transporttechnik auswählt, und
- die Verteilplattform (110) einen Netzoptimierer (113, 314) umfasst, der ausgelegt ist zu entscheiden, welche Transporttechnik einem bestimmten Kanal zugewiesen werden soll.

19. System nach Anspruch 18, wobei das System ein Kommunikationssystem ist, das Folgendes umfasst:
- eine Funktion, die ausgelegt ist, Kanalumschaltinformationen von Teilnehmern, die einen Broadcast-Dienst und/oder einen Unicast-Dienst verwenden, zu zählen.

## Revendications

1. Un procédé de distribution de données,
- dans lequel des données sont distribuées par une plateforme de distribution (110) par l'intermédiaire d'au moins deux techniques de transport vers plusieurs dispositifs (120, 304, 305, 306, 307, 311, 312),
lesdites techniques de transport comprenant monodiffusion et radiodiffusion,
**caractérisé en ce que**
- la technique de transport est sélectionnée par la plateforme de distribution (110) en fonction d'un nombre de dispositifs demandant ou utilisant lesdites données et en fonction de prévisions de trafic basées sur des informations de consultation d'historique, le nombre des dispositifs demandant ou utilisant lesdites données étant estimé en fonction d'informations en retour, des dispositifs alimentés par des données de radiodiffusion fournissant des informations de commutation de canal (105, 319, 320) comme informations en retour,
- lesdites informations en retour fournies par lesdits dispositifs alimentés par lesdites données de radiodiffusion sont recueillies par un compteur de commutations de radiodiffusion (150, 313) et fournies et/ou envoyées à la plateforme de distribution (110) sélectionnant la technique de transport,
- un optimiseur de réseau (113, 314) intégré à la plateforme de distribution (110) décide de la technique de transport à affecter à un canal particulier.

2. Le procédé selon la revendication 1, dans lequel lesdites données comprennent des données audio, des données vidéo, des données de signalisation et/ou des données d'utilisateur.

3. Le procédé selon l'une quelconque des revendications précédentes, dans lequel lesdites données sont diffusées en continu vers lesdits plusieurs dispositifs.

4. Le procédé selon l'une quelconque des revendications précédentes, dans lequel lesdites techniques de transport comprennent au moins deux des techniques suivantes :
- monodiffusion,
- radiodiffusion,
- monodiffusion et radiodiffusion.

5. Le procédé selon l'une quelconque des revendications précédentes, dans lequel lesdites données sont acheminées vers les dispositifs par l'intermédiaire de canaux.

6. Le procédé selon l'une quelconque des revendications précédentes, dans lequel ledit dispositif se compose d'au moins un des dispositifs suivants :
- un terminal mobile,
- un ordinateur, plus particulièrement un ordinateur mobile,
- un assistant numérique personnel,
- un dispositif de télévision,
- un décodeur,
- un dispositif vidéo,
- un dispositif audio,
- un enregistreur, plus particulièrement un enregistreur vidéo.

7. Le procédé selon l'une quelconque des revendications précédentes, dans lequel le nombre de dispositifs demandant ou utilisant lesdites données est déterminé en fonction des informations en retour.

8. Le procédé selon l'une quelconque des revendications précédentes, dans lequel les informations en retour sont fournies au moyen d'un attribut d'une norme DVB-H/OMA-BCAST.

9. Le procédé selon l'une quelconque des revendications précédentes, dans lequel les informations en retour comprennent des informations régionales et/ou géographiques.

10. Le procédé selon l'une quelconque des revendications précédentes, dans lequel lesdites informations en retour sont fournies par l'intermédiaire d'une connexion en monodiffusion par des dispositifs utilisant un service de monodiffusion.

11. Le procédé selon l'une quelconque des revendications précédentes, dans lequel la technique de transport est sélectionnée par la permutation de techniques de transport.

12. Le procédé selon la revendication 11, dans lequel la technique de transport est sélectionnée par une permutation entre monodiffusion et radiodiffusion ou vice versa.

13. Le procédé selon la revendication 12, dans lequel un canal de monodiffusion acheminant la plus grande quantité de trafic est permuté avec un canal de radiodiffusion acheminant la plus faible quantité de trafic.

14. Le procédé selon l'une quelconque des revendications 11 à 13, dans lequel, avant la permutation de la technique de transport, le au moins un dispositif détecte une modification d'un paramètre de fourniture de service et lance une commutation vers un autre support de transport.

15. Le procédé selon l'une quelconque des revendications précédentes, dans lequel la technique de transport est sélectionnée en outre en fonction d'au moins une des informations suivantes :
- des informations de consultation sensiblement en temps réel,
- une qualité et une bande passante d'un canal,
- des échéanciers préfournis statiques.

16. Le procédé selon l'une quelconque des revendications précédentes, dans lequel des programmes ou des canaux desdites données sont triés en fonction d'une demande ou en fonction de la requête effectuée par les plusieurs dispositifs et en conséquence les programmes ou canaux les plus demandés ou requis sont acheminés par l'intermédiaire d'une radiodiffusion sauf autres restrictions.

17. Le procédé selon l'une quelconque des revendications précédentes, dans lequel les plusieurs dispositifs sont au moins partiellement associés à des groupes QoS différents.

18. Un système de distribution de données comprenant une plateforme de distribution (110) adaptée à la distribution de données par l'intermédiaire d'au moins deux techniques de transport vers plusieurs dispositifs (120, 304, 305, 306, 307, 311, 312), lesdites techniques de transport comprenant monodiffusion et radiodiffusion,
**caractérisé en ce que**
- la plateforme de distribution (110) est adaptée en outre à la sélection de la technique de transport en fonction d'un nombre de dispositifs demandant ou utilisant lesdites données et en fonction de prévisions de trafic basées sur des informations de consultation d'historique, le nombre des dispositifs demandant ou utilisant lesdites données étant estimé en fonction d'informations en retour, des dispositifs alimentés par des données de radiodiffusion fournissant des informations de commutation de canal (105, 319, 320) comme informations en retour,
- le système comprend en outre un compteur de commutations de radiodiffusion (150, 313) adapté au recueil et à la fourniture et/ou l'envoi desdites informations en retour fournies par lesdits dispositifs alimentés par lesdites données de radiodiffusion à la plateforme de distribution (110) sélectionnant la technique de transport,
- la plateforme de distribution (110) comprend un optimiseur de réseau (113, 314) adapté de façon à décider la technique de transport à affecter à un canal particulier.

19. Le système selon la revendication 18, dans lequel ledit système est un système de communication comprenant :
- une fonction agencée de façon à décompter des commutations d'informations de canal provenant d'abonnés qui utilisent un service de radiodiffusion et/ou un service de monodiffusion.
